Europäisches Patentamt

European Patent Office

Office européen des brevets

(19)

(11) Veröffentlichungsnummer: **0 264 706**
**B1**

(12) **EUROPÄISCHE PATENTSCHRIFT**

(45) Veröffentlichungstag der Patentschrift:
24.10.90

(51) Int. Cl.⁵: **F01L 9/04**

(21) Anmeldenummer: 87114561.1

(22) Anmeldetag: 06.10.87

(54) Verfahren zum Betrieb einer Brennkraftmaschine.

(30) Priorität: 13.10.86 DE 3634832

(43) Veröffentlichungstag der Anmeldung:
27.04.88 Patentblatt 88/17

(45) Bekanntmachung des Hinweises auf die Patenterteilung:
24.10.90 Patentblatt 90/43

(84) Benannte Vertragsstaaten:
DE ES FR GB IT

(56) Entgegenhaltungen:
WO-A-87/00240
DE-C- 3 307 683

(73) Patentinhaber: AUDI AG,
Auto-Union-Strasse 1 Postfach 220,
D-8070 Ingolstadt(DE)

(72) Der Erfinder hat auf seine Nennung verzichtet

(74) Vertreter: Le Vrang, Klaus, AUDI AG
Postfach 220 Patentabteilung I/EXA,
D-8070 Ingolstadt(DE)

**Beschreibung**

Die Erfindung bezieht sich auf ein Verfahren zum Betrieb einer Brennkraftmaschine, deren Gaswechselventile federunterstützt durch die Er- bzw. Entregung von Elektromagneten in ihre Öffnungs- bzw. Schlienstellungen bewegbar sind gemän dem Oberbegriff des Anspruchs 1.

Beispiele für derartige Brennkraftmaschinen sind in der DE-OS 30 24 109 oder in der DE-OS 3 500 530 beschrieben.

Die dort beschriebenen Brennkraftmaschinen besitzen Gaswechselventile, die von ihrer Öffnungsin die Schließstellung bzw. umgekehrt bewegt werden, indem ein Elektromagnet angesteuert wird, der durch seine Er- bzw. Entregung die Haltekraft auf das Gaswechselventil in seiner einen Endstellung aufhebt, wodurch das Gaswechselventil durch Federkraftunterstützung in Richtung seiner anderen Endstellung bewegt wird, um dort durch einen Magneten wieder eingefangen zu werden.

Durch den Zeitpunkt der Ansteuerung des Elektromagneten läßt sich der Öffnungs- bzw. Schließzeitpunkt des Gaswechselventiles vorherbestimmen.

Es hat sich jedoch gezeigt, daß der genaue öffnungs- bzw. Schließzeitpunkt mit einem Unsicherheitsfaktor behaftet ist, dan es also zu Unregelmäßigkeiten im Betrieb der Brennkraftmaschine kommt.

Die Gesamtzeitspanne vom Zeitpunkt des Ein- oder Ausschaltens des Elektromagneten bis zum Auftreffen des Ankers in der gegenüberliegenden Endstellung setzt sich zusammen aus der Flugzeit des Ankers und einer gewissen Klebzeit, die der Anker braucht, bis er sich von den Polen des Elektromagneten in der Anfangsstellung gelöst hat. Dies ist aus der älteren, nicht vorveröffentlichten WO 87/00240 zu entnehmen.

Eine genauere Betrachtung zeigt, daß die Flugzeit verhältnismäßig zeitkonstant ist und deshalb in erster Näherung gut reproduzierbare Ergebnisse bringt. Hingegen ist die Klebzeit Einflüssen unterworfen.

Aufgabe der Erfindung ist es, ein Verfahren der gattungsgemäßen Art vorzuschlagen, mit Hilfe dessen die Öffnungs- und Schließzeitpunkte genauer einzuhalten sind.

Die Aufgabe wird gelöst durch den Anspruch 1.

Erfindungsgemäß wird deshalb vorgeschlagen, daß die Korrektur der Klebzeit im Betrieb ausgeglichen wird. Dazu wird ein selbstlernendes System vorgeschlagen, bei dem unter Verwendung von Regelalgorithmen entsprechend den Bedingungen die Klebzeit mitberücksichtigt wird. Die Regelalgorithmen können wie beispielsweise Klopfregelungen eine adaptive Annäherung an den gewünschten wert vorsehen. Auf diese Weise lassen sich auch Alterungseinflüsse und Temperatureinflüsse berücksichtigen.

Wie in den weiteren Unteransprüchen beschrieben, können derartige selbstlernende Systeme mit Auftrefferkennung arbeiten oder aber durch eine Variierung versuchen, verschiedene Parameter, die indirekt mit dem exakten Öffnungs- bzw. Schließzeitpunkt in Verbindung stehen, zu optimieren.

Es liegt im Rahmen der Erfindung, nicht sowohl die der Öffnungstellung als auch der Schließstellung zugeordneten Elektromagnete mit einer erfindungsgemäßen Klebzeitkorrektur auszustatten, davon ausgehend, daß beim Einlaßventil die genaue Lage des Schließzeitpunktes, bei dem die Gasströmung bei verältnismäßig hohen Strömungswerten unterbrochen wird, wichtig ist für die exakte Füllung, ist es hinreichend, Klebzeitkorrektur nur für den Schließvorgang des Einlanventiles vorzusehen.

Entsprechendes gilt auch für das Auslaßventil, wobei bei einem , Auslaßventil insgesamt die exakte Lage der Öffnungs- und Schließzeitpunkte nicht ganz so kritisch ist wie beim Einlaßvertil.

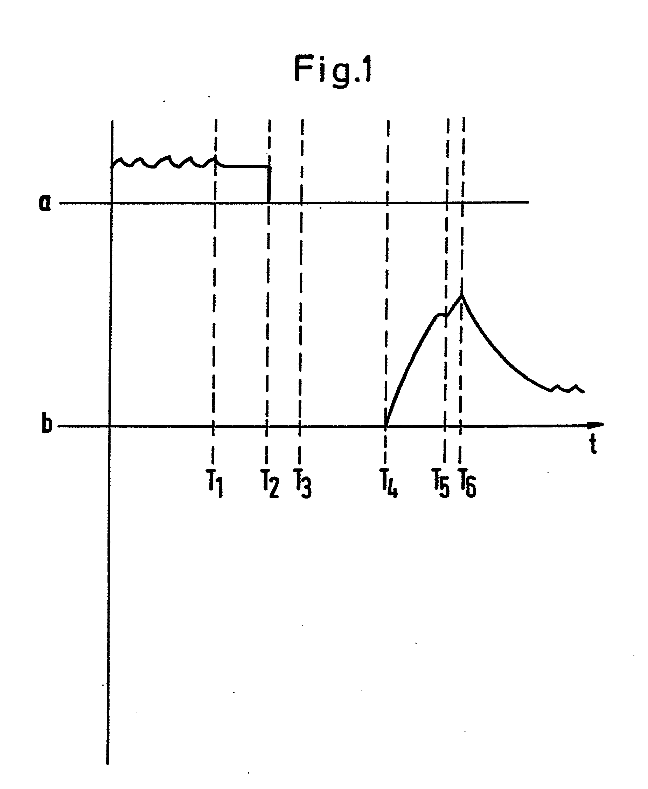

Im folgenden wird das erfindungsgemäne Verfahren anhand Fig. 1 dargestellt.

In Fig. 1 ist eine zeitliche Darstellung der Stromdurchflüsse durch den Elektromagneten in der einen Endstellung und dem Elektromagneten in der anderen Endstellung. Ausgegangen wird von einem System, bei dem der Elektromagnet in der einen, beispielsweise der öffnungsstellung abgeschaltet wird, so daß der Anker sich dann von dem Elektromagneten lösen kann und durch ein Federsystem in die Nähe des anderen Elektromagneten für die Schließstellung gedrückt wird, der gleichzeitig erregt wird. Durch die Erregung des Elektromagneten wird der Anker in der Schließstellung des Gaswechselventiles festgehalten und verbleibt dort, bis das Spiel von Erregung und Entregung der Elektromagneten in umgekehrter Reihenfolge einsetzt. Wegen Einzelheiten des Verfahrens wird auf die DE-OS 3 024 109 verwiesen.

In der Zeitachse a ist der Strom durch den Elektromagneten dargestellt, der das Gaswechselventil in seiner Öffnungsstellung hält. Zum Zeitpunkt T3 soll die Bewegung des Gaswechselventiles beginnen. Bedingt durch unterschiedliche Klebzeiten werden von dieser Steuerkante aus rückwärts die Zeitpunkte T2 und T1 (berechnet) ermittelt. Vom Zeitpunkt 0 bis zum Zeitpunkt T1 ist ein getakteter Stromdurchflun, der Haltestrom, ausreichend, um den Anker am Elektromagneten zu halten. Kurz vor dem Abschalten des Stromdurchflusses durch den Elektromagneten findet in der Zeitspanne von T1 bis T2 ein übergang in eine Konstantstromphase statt, um einen definierten Abschaltzeitpunkt für den getakteten Strom in der Zeitachse a zu erhalten.

Wenn nun der Strom zum Zeitpunkt T2 abgeschaltet wird, versucht ein Federsystem, den Anker von dem Elektromagneten wegzudrücken, wobei sich eine gewisse Klebzeit einstellt, und der Anker löst sich erst zum Zeitpunkt T3 tatsächlich von der Polfläche des Elektromagneten.

Es findet anschließend eine freie Flugphase statt, bis der Anker von dem gegenüberliegenden Elektromagneten eingefangen wird. Der gegenüberleigende Elektromagnet wird zum Zeitpunkt T4 erregt, so daß er dann, wenn der Anker in die Nähe des Elektromagneten gerät, bereits einen genügend großen Fangstrom hat, um den Anker am anzuziehenden Pol zu halten. Die Flugphase dauert von dem Zeitpunkt T3 bis zum Zeitpunkt T5, zum Zeitpunkt T5 trifft der Anker auf dem gegenüberliegenden Elektromagneten auf und wird von ihm eingefangen, was sich durch einen kurzzeitigen Stromabfall zum Zeitpunkt T5 in der Stromkurve darstellt. Vorschläge, diesen kurzzeitigen Stromabfall beim Auftreffen des Ankers zur Auftrefferkennung auszunutzen, sind aus der Literatur bekannt.

Zum Zeitpunkt T6, wenn der Anker zuverlässig von dem Pol des unteren Elektromagneten b eingefangen worden ist, wird der Fangstrom abgeschaltet, der dann allmählich auf einen Wert abfällt, bei dem er für den weiteren Haltestrom getaktet wird. Prinzipiell ist ein derartiges Verfahren, mit getaktetem Haltestrom und erhöhtem Fangstrom zu arbeiten, aus der DE-OS 2 828 678 bekannt.

Die Flugzeit T5 - T3 ist durch die Vorspannung des Federsystems vorgegeben und in erster Näherung konstant, während die Werte für die Klebzeit T3 - T2 stark streuen, so daß Serienunterschiede in der Gesamtzeit T5 - T2 vor allem durch die unterschiedliche Klebzeit beeinflußt werden. Eine genaue Ermittlung der Klebzeit, beispielsweise bei einer werksseitig hergestellten Brennkraftmaschine direkt nach der Produktion, führt dazu, daß man, um einen exakt gewünschten Zeitpunkt T3 zu erhalten, den Zeitpunkt T2 je nach unterschiedlicher Klebzeit etwas vor- oder ggf. sogar zurückverlegen mun, um stets ein Ablösen des Ankers vom Elektromagneten genau zum Zeitpunkt T3 zu erhalten.

Dabei ist bei bevorzugter Ausführung vorgesehen, dan rechnerisch der Zeitpunkt T3 festgelegt wird. Bei theoretischer Klebzeit von null würde der Korrekturwert T3 - T2 = 0. Da in der Praxis immer Klebzeiten auftreten, ist, wenn als Referenzwert T3 genommen wird, immer nur eine Vorverlegung um den individuellen Wert T3 - T2, also eine Vorverlegung in eine Richtung, notwendig.

Eine verbesserte Genauigkeit läßt sich erreichen, wenn, beispielsweise durch eine integrierte Aufprallerkennung zum Zeitpunkt T5, die Gesamtzeit T5 - T2 im Betrieb ermittelt werden kann und dementsprechend die Abschaltkante T2 so gelegt werden kann, dan der Ist-Zeitpunkt T5 mit dem aus der Sicht der Steuerung der Brennkraftmaschine optimalen Zeitpunkt zusammenfällt.

## Patentansprüche

1. Verfahren zum Betrieb einer Brennkraftmaschine, deren Gaswechselventile federunterstützt durch die Er- oder Entregung von Elektromagneten in ihre Öffnungs- bzw. Schließstellungen bewegbar sind, mit folgenden Schritten:

a) durch den Ein- bzw. Abschaltzeitpunkt des Stromflusses wird der Abfallzeitpunkt des mit der Bewegung des Gaswechselventiles gekoppelten Ankers festgelegt,

b) der Ein- bzw. Abschaltzeitpunkt wird bestimmt unter Berücksichtigung der Klebzeit des Ankers an der Polfläche des Elektromagneten,

c) jedem einem Gaswechselventil zugeordneten Anker ist in seiner jeweiligen Endstellung eine individuelle Klebzeit zugeordnet,

d) der individuelle Ein- und Abschaltzeitpunkt für die Elektromagnete wird unter Berücksichtigung der Klebzeit ermittelt,

e) während des Betriebes wird die Zeitspanne zwischen dem an den Elektromagneten gelegten Schaltvorgang, der ein Ablösen des Ankers bewirkt, und dem Erreichen der entgegengesetzten Endstellung des Gaswechselventils ermittelt und gespeichert,

f) diese Zeitspanne wird im Betrieb des Ankers erneut gemessen und zur adaptiven Berechnung der individuellen Klebzeit ermittelt.

2. Verfahren nach Anspruch 1, dadurch gekennzeichnet, daß die Ermittlung der Klebzeit mit Hilfe einer Auftrefferkennung durchgeführt wird, wobei sich die Gesamtzeitspanne vom Schaltvorgang bis zum Auftreffen aus der individuellen Klebzeit und der zeitlich im wesentlichen konstanten Flugphase des Gaswechselventils zusammensetzt.

3. Verfahren nach Anspruch 1, dadurch gekennzeichnet, daß die Abgaszusammensetzung gemessen wird und durch Variation der zu berücksichtigenden individuellen Klebzeit optimiert wird.

4. Verfahren nach Anspruch 1, dadurch gekennzeichnet, daß die Leistung der Brennkraftmaschine gemessen wird und durch Variation der zu berücksichtigenden individuellen Klebzeit optimiert wird.

5. Verfahren nach Anspruch 1, dadurch gekennzeichnet, daß der Zylinderinnendruck gemessen wird und durch Variation der zu berücksichtigenden individuellen Klebzeit optimiert wird.

6. Verfahren nach einem der Ansprüche 1 bis 5, dadurch gekennzeichnet, daß allen Elektromagneten ein rechnerischer Ablösezeitpunkt zugeordnet wird, der mit dem gewünschten Ablösezeitpunkt des Ankers zusammenfällt, und daß die Klebzeit durch individuelle Vorverlegung des Schaltzeitpunktes von diesem Ablösezeitpunkt berücksichtigt wird.

## Revendications

1. Procédé de commande du fonctionnement d'un moteur à combustion interne dont les soupapes à alternance de gaz peuvent être placées respectivement dans leurs positions d'ouverture et de fermeture par l'excitation et la désexcitation d'électro-aimants avec le renfort de ressorts, comprenant les étapes sulvantes:

a) l'instant de relâchement de l'armature solidaire du mouvement de la soupape à alternance de gaz est fixé par l'instant de mise en circuit ou hors circuit du flux de courant,

b) l'instant de mise en circuit ou hors circuit est déterminé en prenant en considération le temps de collage de l'armature sur la surface polaire de l'électro-aimant,

c) un temps de collage individuel est affecté à chaque armature associée à une soupape à alternance de gaz dans chacune de ses positions extremes,

d) l'instant individuel de mise en circuit et hors circuit pour les électro-aimants est établi en prenant en considération le temps de collage,

e) pendant le fonctionnement, le laps de temps entre le processus de commutation qui est appliqué à l'électroaimant et qui produit un relâchement de l'armature et le moment où est atteinte la position extrême opposée de la soupape à alternance de gaz est établi et mémorisé,

f) ce laps de temps est mesuré de nouveau au fonctionnement de l'armature et est établi pour le calcul adaptatif du temps de collage individuel.

2. Procédé selon la revendication 1, caractérisé en ce que l'établissement du temps de collage est effectué à l'aide d'une connaissance de l'impact, le laps de temps total entre le processus de commutation et l'impact étant constitué du temps de collage individuel et de la phase de vol de la soupape à alternance de gaz, qui est pratiquement constante dans le temps.

3. Procédé selon la revendication 1, caractérisé en ce que la composition des gaz d'échappement est mesurée et est optimisée par variation du temps de collage individuel pris en considération.

4. Procédé selon la revendication 1, caractérisé en ce que la puissance du moteur à combustion interne est mesurée et est optimisée par variation du temps de collage individuel pris en considération.

5. Procédé selon la revendication 1, caractérise en ce que la pression interne des cylindres est mesurée et est optimisée par variation du temps de collage individuel pris en considération.

6. Procédé selon l'une quelconque des revendications 1 à 5, caractérisé en ce qu'il est affecté à tous les électro-aimants un instant de relâchement calculé qui coïncide avec l'instant de relâchement désiré de l'armature, et en ce que le temps de collage est pris en considération par avancement individuel de l'instant de commutation par rapport à cet instant de relâchement.

**Claims**

1. Method for operating an internal combustion engine, the gas change valves of which can be moved in a spring supported manner into their opening and closing settings respectively as a result of the excitation or de-excitation of electromagnets, having the following steps:

  a) the time when the armature coupled to the motion of the gas change valve drops is determined by the switch-on and switch-off time respectively of the current flow,

  b) the switch-on and switch-off time respectively is determined with regard to the time that the armature adheres to the pole surface of the electromagnet,

  c) an individual adhesion time is associated with each armature, associated with a gas change valve, in its respective end setting,

  d) the individual switch-on and switch-off time for the electromagnets is calculated with regard to the adhesion time,

  e) during operation, the time period between the switching process, which is performed on the electromagnet and brings about a release of the armature, and reaching of the opposite end setting of the gas change valve is calculated and stored,

  f) this time period is measured again during the operation of the armature and calculated for the adaptive calculation of the individual adhesion time.

2. Method according to Claim 1, characterized in that the calculation of the adhesion time is carried out with the aid of an impact detection, the overall time period from the switching process to the impact being made up of the individual adhesion time and the flight phase, which is essentially constant in terms of timing, of the gas change valve.

3. Method according to Claim 1, characterized in that the exhaust gas composition is measured and is optimized by variation of the individual adhesion time which is to be taken into account.

4. Method according to Claim 1, characterized in that the power of the internal combustion engine is measured and optimized by variation of the individual adhesion time which is to be taken into account.

5. Method according to Claim 1, characterized in that the cylinder inner pressure is measured and is optimized by variation of the individual adhesion time which is to be taken into account.

6. Method according to one of Claims 1 to 5, characterized in that a calculated release time which coincides with the desired release time of the armature is associated with all the electromagnets, and in that the adhesion time is taken into account by individually advancing the switching time of this release time.

# Fig.1